# EUROPÄISCHE PATENTANMELDUNG

(11) **EP 4 814 341 A1**
(43) Veröffentlichungstag der Anmeldung: **30.09.2026**
(21) Anmeldenummer: 25166966.9
(22) Anmeldetag: 28.03.2025
(51) Int. Cl.: F16H 57/02, F16H 57/025, F16H 57/04

(54) **GETRIEBEGEHÄUSEANORDNUNG MIT LUFTLEITELEMENT**

(71) Anmelder: Flender GmbH, 46395 Bocholt (DE); Flender Industriegetriebe GmbH, 09322 Penig (DE)
(72) Erfinder: SCHROER, Dirk, 46395 Bocholt (DE)
(74) Vertreter: Michalski Hüttermann & Partner mbB

(57) **Zusammenfassung**

Getriebegehäuseanordnung 10 für ein Industriegetriebe 50, umfassend ein eine erste Mittelebene E_{M1} ausbildendes Gehäuseelement 12, und ein eine zweite Mittelebene E_{M2} ausbildendes Luftleitelement 14, wobei das Luftleitelement 14 das Gehäuseelement 12 zumindest teilweise einhaust, ein zumindest teilweise innerhalb des Luftleitelements 14 angeordneter Elektrolüfter 16, um während eines Betriebs des Elektrolüfters 16 einen Luftstrom entlang des Gehäuseelements 12 zu erzeugen, wobei die erste Mittelebene E_{M1} des Gehäuseelements 12 und die zweite Mittelebene E_{M2} des Luftleitelements 14 unter einem Winkel zwischen 30° und 60° zueinander stehen.

## Beschreibung

Die Erfindung betrifft eine Getriebegehäuseanordnung für ein Industriegetriebe, mit einem eine erste Mittelebene ausbildenden Gehäuseelement, und einem eine zweite Mittelebene ausbildenden Luftleitelement, wobei das Luftleitelement das Gehäuseelement zumindest teilweise einhaust, einen zumindest teilweise innerhalb des Luftleitelements angeordneten Elektrolüfter, um während eines Betriebs des Elektrolüfters einen Luftstrom entlang des Gehäuseelements zu erzeugen.

Getriebe haben eine thermische Leistungsgrenze aufgrund der Wärmeentwicklung während ihres Betriebs. In manchen Fällen liegt die thermische Leistungsgrenze unterhalb der mechanischen Leistungsgrenze. In diesen Fällen ist eine Kühlung erforderlich, um die thermische Leistungsgrenze anzuheben und optimalerweise der mechanischen Leistungsgrenze anzugleichen. Die Kühlung kann mit verschiedenen Möglichkeiten erfolgen. Eine Möglichkeit besteht in der Luftkühlung. Es gibt zwei Hauptvarianten der Luftkühlung, nämlich den Wellenlüfter, der durch die Antriebswelle permanent mitgenommen wird, und den elektrisch betriebenen Lüfter bzw. Elektrolüfter. Beide Lüftervarianten sind außerhalb des Getriebes verortet und führen daher zu zugänglichen drehbaren Teilen, die ein Verletzungsrisiko darstellen können. Aus diesem Grund wird eine Schutzhaube benötigt. Im Zusammenhang mit der Luftkühlung wird diese Schutzhaube zum Luftleitelement, um zusätzlich zu dem Schutz vor drehenden Teilen - Schutzfunktion - eine bessere Leitung der Kühlluft zu gewährleisten - Kühlfunktion. Jedes Luftleitelement hat einen definierten Lufteinlass und einen Luftaustrittsbereich. Es gibt Luftleitelemente für Stirnrad- und Kegelstirnradgetriebe in verschiedenen Baugrößen, Übersetzungen und Getriebestufenanzahlen. Insbesondere bei einem Kegelstirnradgetriebe mit angebautem Adaptergehäuse - auch Motorlaterne genannt - wird eine mechanische Luftkühlung aufwendiger. Dies führt zu einer hohen Vielfalt, um für jede Getriebevariante eine passende Getriebegehäuseanordnung bereitzustellen, was eine logistische Herausforderung darstellt. Aus der WO 2021/180484 A1 ist ein Luftleitelement für ein Gehäuse bekannt. Es besteht ein ständiges Bedürfnis die Vielfalt an möglichen Luftleitelementen für verschiedene Getriebetypen- und -größen zu reduzieren.

Es ist die Aufgabe der Erfindung Maßnahmen aufzuzeigen, die es ermöglichen die Vielfalt an möglichen Luftleitelementen für verschiedene Getriebetypen und -größen zu reduzieren.

Die Lösung der Aufgabe erfolgt durch eine Getriebegehäuseanordnung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Getriebegehäuseanordnung für ein Industriegetriebe, mit einem eine erste Mittelebene ausbildenden Gehäuseelement, und einem eine zweite Mittelebene ausbildenden Luftleitelement, wobei das Luftleitelement das Gehäuseelement zumindest teilweise einhaust, einen zumindest teilweise innerhalb des Luftleitelements angeordneten Elektrolüfter, um während eines Betriebs des Elektrolüfters einen Luftstrom entlang des Gehäuseelements zu erzeugen, wobei die erste Mittelebene des Gehäuseelements und die zweite Mittelebene des Luftleitelements unter einem Winkel zwischen 20° und 80° zueinander stehen.

Die vorgeschlagene Getriebegehäuseanordnung ist ein optimaler Kompromiss zwischen einer vertikalen Dachkonstruktion eines Luftleitelements inkl. Lüfter und einer seitlichen Anordnung, d.h. neben dem Getriebegehäuse. Mit der vorgeschlagenen Getriebegehäuseanordnung kann die jeweilige Stirnfläche des Getriebegehäuses effektiv mitgekühlt werden. Ein hoher Wirkungsgrad der Kühlung ist gewährleistet, vor allem da der Kühlluftstrom mehreren Flächen erreicht und kühlt. Das Luftleitelement kann insofern kleiner dimensioniert werden, so dass wiederum weniger Störkonturen des Getriebegehäuses bzw. Anbaukomponenten bei der konstruktiven Auslegung berücksichtigt werden müssen. Insgesamt sinken die Anzahl der Fälle, in denen in einem Servicefall die Getriebegehäuseanordnung von dem Getriebegehäuse demontiert werden muss.

In dem Gehäuseelement ist mit geeigneten Mitteln eine Antriebswelle gelagert. Die Antriebswelle ist mit einem Antriebsmotor antriebsverbunden und kann von diesem bedarfsweise um eine Drehachse angetrieben werden. In dem Gehäuseelement befindet sich regelmäßig in einem Ölsumpf ein Ölvolumen zur Schmierung der Getriebekomponenten wie Verzahnungen und Lagerungen. In dem Ölsumpf kann ein Temperaturfühler zur Erfassung der Öltemperatur angeordnet sein.

Über die Getriebegehäuseanordnung wird eine verbesserte Anströmung der Getriebeoberfläche gewährleistet und auf dieser ein vergrößerter Anströmbereich erreicht. Durch die winklige Anordnung des Luftleitelements wird vorteilhafterweise erreicht, dass die Kühlluft verschiedene Oberflächenseiten des Gehäuseelements erreichen kann und zwar ohne durch zusätzliche Maßnahme zu starken Richtungsänderungen gezwängt werden zu müssen. Insgesamt wird ein verbessertes Herabkühlen der Getriebetemperatur erreicht. Insbesondere ist dies in vorteilhafterweise gegeben, wenn das Luftleitelement in einer in der ersten Mittelebene des Gehäuseelements liegenden Richtung über eine Stirnseite des Gehäuseelements übersteht. Hierbei kann insbesondere vorgesehen sein, dass das Luftleitelement sowohl über die Stirnseite des Gehäuseelements und als auch eine orthogonal zu der Stirnseite stehende Längsseite übersteht. Insbesondere vorteilhaft ist, wenn das Luftleitelement annähernd hälftig über die Stirnseite des Gehäuseelements einerseits und über die hierzu orthogonale Längsseite andererseits übersteht.

In einer bevorzugten Ausgestaltung ist das Luftleitelement mehrteilig mit zumindest einem Haubenelement und einem an das Haubenelement angesetzten Adapterelement ausgeführt, wobei das Haubenelement gegenüber dem Gehäuseelement befestigt ist und hierbei der Elektrolüfter entweder direkt am Luftleitblech gehalten ist oder das Adapterelement den Elektrolüfter aufnimmt. Das Luftleitelement kann hierbei als nicht-tragendes Bauteil ausgeführt sein und lediglich als Umhausung für den Elektrolüfter dienen. Dies ist insbesondere dann besonders vorteilhaft, wenn der Elektrolüfter gegenüber dem Gehäuseelement befestigt ist. Hierdurch ergibt sich für das Luftleitelement auch die Möglichkeit als Nachrüstteil dienen zu können. Zur Aufnahme des Elektrolüfters kann das Adapterelement einen zumindest weitestgehend runden Ausschnitt ausbilden.

In einer bevorzugten Ausgestaltung ist das Adapterelement schwenkbar gegenüber dem Haubenelement ausgeführt. Hierbei ist der Elektrolüfter gegenüber dem Adapterelement befestigt und über die winklige Verstellbarkeit kann eine optimale Strömungsrichtung zu den Seiten des Getriebes sichergestellt werden.

In einer außerdem bevorzugten Ausgestaltung verläuft der Ausschnitt bezogen auf einen Mittelpunkt des Adapterelements exzentrisch. In konkrete Ausgestaltung können auf dem Adapterelement mehrere durch eine Laserperforation hergestellte Sollbruchstellen vorhanden sein, um über die Sollbruchstellen bedarfsweise Ausschnitte herauszuschneiden.

In einer zudem bevorzugten Ausgestaltung sind innerhalb des Luftleitelements mehrere Leitbleche angeordnet, zur zumindest seitlichen Verteilung von Kühlluft. Hierdurch kann eine noch gezieltere Strömungsbeeinflussung, eine effektivere Kühlung und somit ein verbesserter Wärmeabtrag an den Gehäuseseitenwänden erfolgen.

Bei einer weiteren bevorzugten Ausgestaltung ist eine Getriebeeingangswelle und ein mit dem Gehäuseelement verbundenes Adaptergehäuse zum Adaptieren eines Antriebsmotors vorgesehen und das Luftleitelement ist mittelbar über das Adaptergehäuse mit dem Gehäuseelement verbunden. Hierdurch ist gewährleistet, dass der Getriebeeingangsbereich durch einen gezielt dorthin gelenkten Kühlluftstrom gekühlt wird. Insbesondere ist hierbei bevorzugt, dass ein Innenvolumen des Luftleitelements kommunizierend mit einem Innenvolumen des Adaptergehäuses verbunden ist.

Bevorzugt ist das Luftleitelement über in ihrer Position bedarfsweise veränderbare Halterungen gegenüber dem Gehäuseelement gehalten.

Die Aufgabe wird auch gelöst durch ein Getriebe mit einer Getriebegehäuseanordnung wie beschrieben, wobei es sich um ein Stirnradgetriebe oder ein Kegelstirnradgetriebe handelt.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Draufsicht eines Kegel-Stirnradgetriebes;
Fig. 2: eine Ausgestaltung einer Getriebegehäuseanordnung für ein Getriebe nach Figur 1;
Fig. 3: eine Alternative zu der in Figur 2 dargestellten Anordnung;
Fig. 4: eine Ausgestaltung einer Getriebegehäuseanordnung für ein Stirnradgetriebes;
Fig. 5: ein Luftleitelement als Einzelheit in Explosionsdarstellung;
Fig. 6: eine Variante eines Luftleitelements als Einzelheit in Explosionsdarstellung;
Fig. 7: eine Einzelheit eines Elektrolüfters;
Fig. 8a) bis 8c): verschiedene Stellungen des Elektrolüfters in dem Luftleitelement und
Fig. 9: eine schematische Draufsicht des Adapterelements eines Luftleitelements.

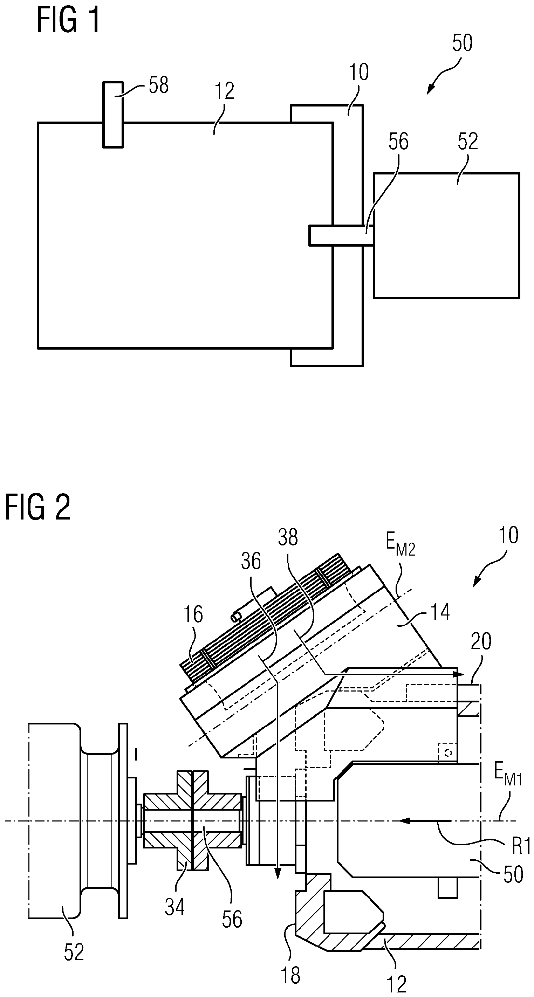

Die Figur 1 zeigt in einer schematischen Draufsicht ein Getriebe 50 in Form eines Kegel-Stirnradgetriebes. Das Getriebe 50 kann auch als Stirnradgetriebe ausgeführt sein. Das Getriebe 50 ist anhand eines Gehäuseelements 12, einer Getriebeeingangswelle 56 und einer Getriebeausgangswelle 58 dargestellt. Zudem ist ein Luftleitelement 10 gezeigt, das vorliegend auf der Seite der Getriebeeingangswelle 56 das Gehäuseelement 12 teilweise umschließend angeordnet ist. An die Getriebeeingangswelle 56 ist zum Antrieb dieser ein Antriebsmotor 52 angeschlossen. Ein innerhalb des Luftleitelements 10 angeordneter Lüfter zur Erzeugung eines Kühlluftstroms ist nicht dargestellt. Hierzu wird auf die nachfolgend beschriebenen Figuren verwiesen.

Die Figur 2 zeigt ausschnittsweise eine mögliche Ausgestaltung der Getriebegehäuseanordnung 10 für ein Industriegetriebe 50. Bei dem Getriebe 50 handelt es sich um ein Kegel-Stirnradgetriebe. Gezeigt ist ein antriebsmäßig über eine Kupplung 34 mit dem Getriebe 50 verbundener Antriebsmotor 52. Es ist ein Gehäuseelement 12 des Getriebes 50 vorgesehen und zu dem Gehäuseelement 12 kann eine erste Mittelebene E_{M1} definiert werden. Außerdem ist ein Luftleitelement 14 vorgesehen, welches das Gehäuseelement 12 teilweise einhaust und zu dem eine zweite Mittelebene E_{M2} definiert werden kann. Die Ebenen E_{M1} und E_{M2} sind vorliegend mit strichpunktierten Linien dargestellt. Ein Elektrolüfter 16 ist vorgesehen, der vorliegend innerhalb des Luftleitelements 14 angeordnet ist, um während eines Betriebs des Elektrolüfters 16 einen Luftstrom entlang des Gehäuseelements 12 zu erzeugen. Zum Betrieb des Elektrolüfters 16 kann eine nicht dargestellte und nicht näher beschriebene Regel- und Steuerungseinheit vorgesehen sein.

Die Anordnung des Luftleitelements 14 zu dem Gehäuseelement 12 ist derart, dass die erste Mittelebene E_{M1} des Gehäuseelements 12 und die zweite Mittelebene E_{M2} des Luftleitelements 14 unter einem Winkel zwischen 20° und 80° zueinander stehen. Das Luftleitelement 14 steht in einer in der ersten Mittelebene E_{M1} des Gehäuseelements 12 liegenden Richtung R₁ über eine Stirnseite 18 des Gehäuseelements 12 über. Außerdem steht das Luftleitelement 14 über eine, zumindest weitestgehend, orthogonal zu der Stirnseite 18 stehende Längsseite 20 des Gehäuseelements 12 über. Der Überstand über die Stirnseite 18 einerseits und über die Längsseite 20 andererseits kann bezogen auf das Luftleitelement 14 annähernd gleich sein. Ein durch den Elektrolüfter 16 erzeugter und durch das Luftleitelement 14 geleiteter Kühlluftstrom teilt sich infolge dieser winkligen Positionierung in einen Teilluftstrom 36 entlang der Stirnseite 18 und einen weiteren Teilstrom 38 entlang der Längsseite 20 des Gehäuseelements 12 auf.

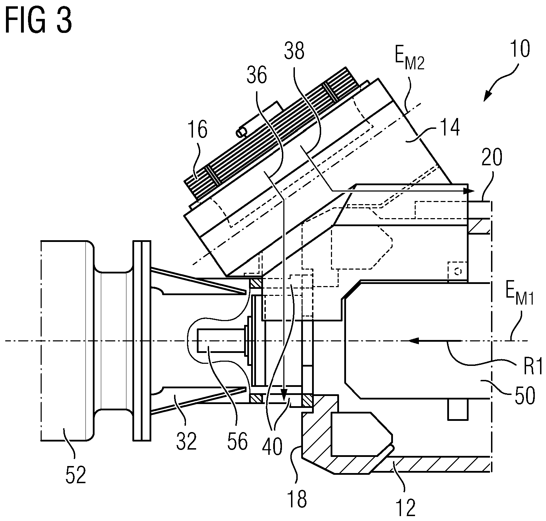

Die Figur 3 zeigt eine Alternative zu der in Figur 2 dargestellten Anordnung. Es ist ein Adaptergehäuse 32 vorgesehen, das die Getriebeeingangswelle 56 umgibt und den Antriebsmotors 52 mit dem Gehäuseelement 12 verbindet. Ein Innenvolumen des Luftleitelements 14 ist kommunizierend mit einem Innenvolumen des Adaptergehäuses 32 verbunden, so dass der entlang der Stirnfläche 18 abgelenkte Luftstrom 36 in das Adaptergehäuse 32 geleitet wird. Hierbei weist das Adaptergehäuse 32 vertikal oben und vertikal unten Öffnungen 40 auf, durch die der Luftstrom in das Adaptergehäuse 32 eintreten und wieder austreten kann.

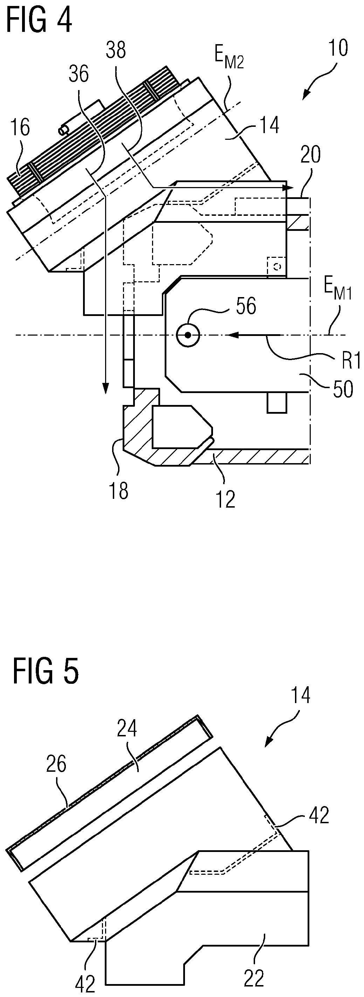

Die Figur 4 zeigt ausschnittsweise eine mögliche Ausgestaltung der Getriebegehäuseanordnung 10 für ein Industriegetriebe 50, wobei es sich um ein Stirnradgetriebe handelt. Ein Antriebsmotor 52 und ein Adaptergehäuse 32 sind nicht dargestellt.

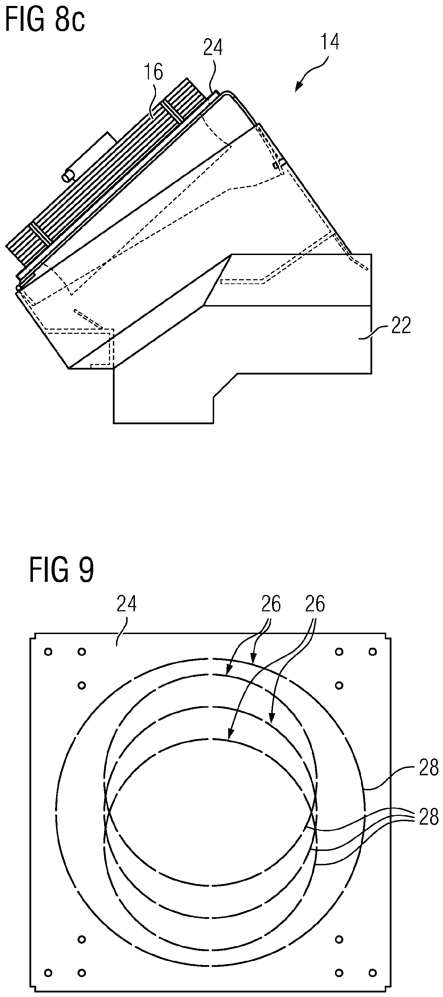

Die Figur 5 zeigt das Luftleitelement 14 als Einzelheit in Explosionsdarstellung. Das Luftleitelement 14 ist mehrteilig mit einem Haubenelement 22 und einem an das Haubenelement 22 von schräg oben angesetzten Adapterelement 24 ausgeführt. Der hier nicht dargestellte Elektrolüfter 16 sitzt in einem zumindest weitestgehend runden Ausschnitt 26 des Adapterelements 24 ein, vgl. hierzu Figur 9. Das Luftleitelement 14 weist Halterungen 42 auf, die in ihrer Position bedarfsweise veränderbar sind und über die das Luftleitelement 14 gegenüber dem Gehäuseelement 12 gehalten wird.

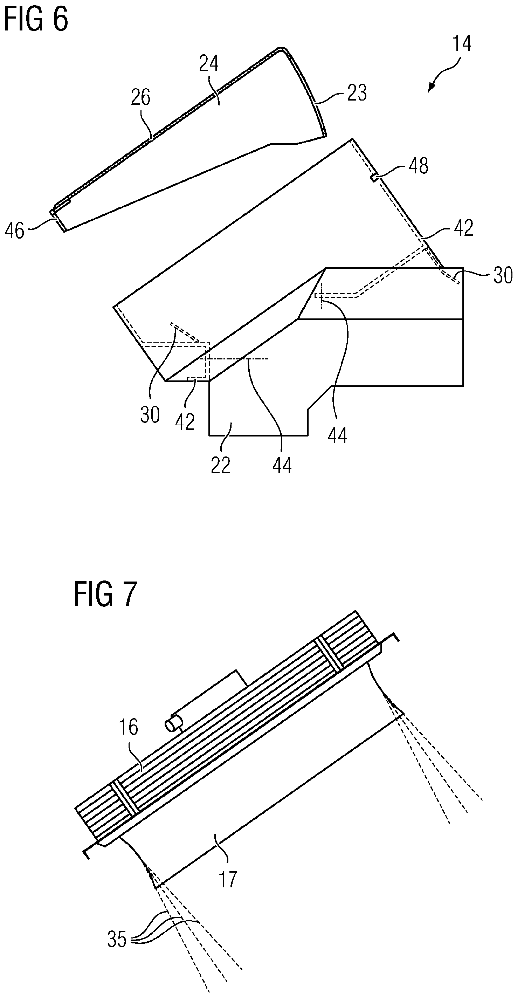

Die Figur 6 zeigt eine Variante des Luftleitelements 14 als Einzelheit in Explosionsdarstellung. Hierbei ist das Adapterelement 24 schwenkbar gegenüber dem Haubenelement 22 ausgeführt. Gezeigt ist, dass innerhalb des Luftleitelements 14 mehrere Leitbleche 30 angeordnet sind. Mit dem Bezugszeichen 44 sind Befestigungspunkte bezeichnet, über die das Luftleitelement 14 gegenüber dem Gehäuseelement 12 befestigt werden kann. Die Befestigung des schwenkbaren Adapterelements 24 gegenüber dem Haubenelement 22 erfolgt über Scharniere 46 und über ein Schloss 48. Am Adapterelement 24 ist der nicht dargestellte Elektrolüfter 16 befestigt. Hierbei lassen sich zum einen unterschiedlich große Elektrolüfter 16, bei gleichem Adapterelement 24, befestigen. Zudem lässt sich das Adapterelement 24 stufenlos vertikal schwenken und fixieren. Hierzu ist eine vertikale Langlochnut 23 eingebracht der mittels dem Schloss 48 fixiert wird.

In der Figur 7 ist als Einzelheit ein Elektrolüfter 16 gezeigt. Die Elektrolüfter 16 ist vorliegend abströmseitig mit einem Strahlrohr 17 versehen. Mit dem Bezugszeichen 35 sind verschiedene Luftströmungsstrahle bezeichnet, die infolge der Schwenkbarkeit des Adapterelements 24 gegenüber dem Haubenelement 22 realisiert werden können.

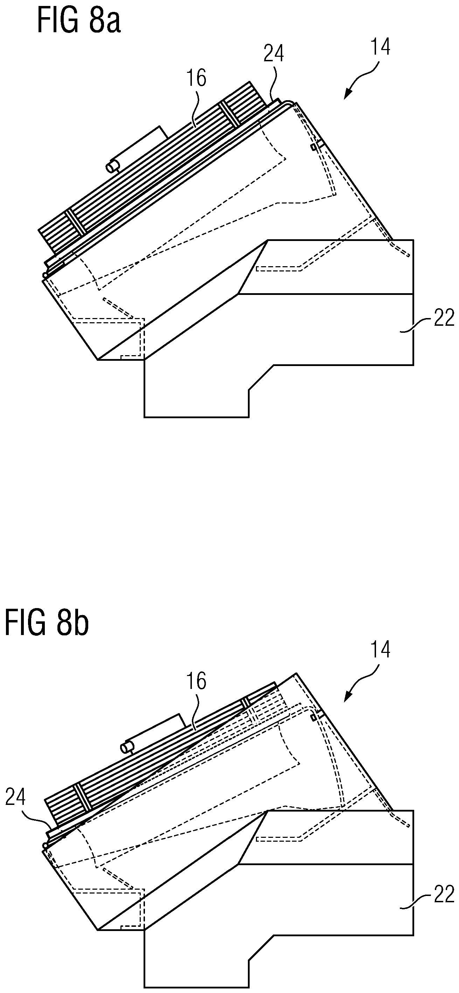

Die Figuren 8a) bis 8c) zeigen drei unterschiedliche Schwenkpositionen des Adapterelements 24 bzgl. des Haubenelements 22.

Die Figur 9 zeigt in einer Draufsicht und schematisch ein Adapterelement 24 und in diesem die Möglichkeit den Ausschnitt 26, in den der Elektrolüfter 16 eingesetzt ist, verschiedentlich anzuordnen und in seine Größe an den Elektrolüfter 16 anzupassen, der je nach Anwendung unterschiedlich groß sein kann. Der Ausschnitt 26 kann bezogen auf einen Mittelpunkt des Adapterelements 24 exzentrisch verlaufen. Auf dem Adapterelement 24 können mehrere durch eine Laserperforation 28 hergestellte Sollbruchstellen vorhanden sind, um über die Sollbruchstellen bedarfsweise Ausschnitte 26 herauszubrechen.

### Bezugszeichenliste

- 10: Getriebegehäuseanordnung
- 12: Gehäuseelement
- 14: Luftleitelement
- 16: Elektrolüfter
- 17: Strahlrohr
- 18: Stirnseite
- 20: Längsseite
- 22: Haubenelement
- 24: Adapterelement
- 23: Langlochnut
- 26: Ausschnitt
- 28: Laserperforation
- 30: Leitblech
- 32: Adaptergehäuse
- 34: Kupplung
- 35: Luftströmungsstrahl
- 36: Teilluftstrom
- 38: Teilluftstrom
- 40: Öffnung
- 42: Halterung
- 44: Befestigungspunkte
- 46: Scharnier
- 48: Schloss
- 50: Getriebe
- 52: Antriebsmotor
- 56: Getriebeeingangswelle
- 58: Getriebeausgangswelle

## Patentansprüche

1. Getriebegehäuseanordnung (10) für ein Industriegetriebe (50), umfassend ein eine erste Mittelebene (E_{M1}) ausbildendes Gehäuseelement (12), und
ein eine zweite Mittelebene (E_{M2}) ausbildendes Luftleitelement (14), wobei das Luftleitelement (14) das Gehäuseelement (12) zumindest teilweise einhaust,
ein zumindest teilweise innerhalb des Luftleitelements (14) angeordneter Elektrolüfter (16), um während eines Betriebs des Elektrolüfters (16) einen Luftstrom entlang des Gehäuseelements (12) zu erzeugen,
**dadurch gekennzeichnet, dass**
die erste Mittelebene (E_{M1}) des Gehäuseelements (12) und die zweite Mittelebene (E_{M2}) des Luftleitelements (14) unter einem Winkel zwischen 30° und 60° zueinander stehen.

2. Getriebegehäuseanordnung (10) nach Anspruch 1, **dadurch gekennzeichnet, dass** das Luftleitelement (14) in einer in der ersten Mittelebene (E_{M1}) des Gehäuseelements (12) liegenden Richtung über eine Stirnseite (18) des Gehäuseelements (12) übersteht.

3. Getriebegehäuseanordnung (10) nach Anspruch 1 oder 2, **dadurch gekennzeichnet, dass** das Luftleitelement (14), insbesondere annähernd hälftig, über die Stirnseite (18) des Gehäuseelements (12) und über eine orthogonal zu der Stirnseite (18) stehende Längsseite (20) übersteht.

4. Getriebegehäuseanordnung (10) nach einem der Ansprüche 1 bis 3, **dadurch gekennzeichnet, dass** das Luftleitelement (14) mehrteilig mit zumindest einem Haubenelement (22) und einem an das Haubenelement (22) angesetzten Adapterelement (24) ausgeführt ist, wobei das Haubenelement (22) gegenüber dem Gehäuseelement (12) befestigt ist und das Adapterelement (24) den Elektrolüfter (16) aufnimmt.

5. Getriebegehäuseanordnung (10) nach Anspruch 4, **dadurch gekennzeichnet, dass** das Adapterelement (24) schwenkbar gegenüber dem Haubenelement (22) ausgeführt ist.

6. Getriebegehäuseanordnung (10) nach Anspruch 4 oder 5, **dadurch gekennzeichnet, dass** das Adapterelement (24) einen zumindest weitestgehend runden Ausschnitt (26) zur Aufnahme des Elektrolüfters (16) ausbildet.

7. Getriebegehäuseanordnung (10) nach Anspruch 6, **dadurch gekennzeichnet, dass** der Ausschnitt (26) bezogen auf einen Mittelpunkt des Adapterelements (24) exzentrisch verläuft.

8. Getriebegehäuseanordnung (10) nach Anspruch 6 oder 7, **dadurch gekennzeichnet, dass** auf dem Adapterelement (24) mehrere durch eine Laserperforation (28) hergestellte Sollbruchstellen vorhanden sind, um über die Sollbruchstellen bedarfsweise Ausschnitte (26) herauszuschneiden.

9. Getriebegehäuseanordnung (10) nach einem der Ansprüche 1 bis 8, **dadurch gekennzeichnet, dass** der Elektrolüfter (16) gegenüber dem Gehäuseelement (12) befestigt ist.

10. Getriebegehäuseanordnung (10) nach einem der Ansprüche 1 bis 9, **dadurch gekennzeichnet, dass** innerhalb des Luftleitelements (14) mehrere Leitbleche (30) angeordnet sind, zur zumindest seitlichen Verteilung von Kühlluft.

11. Getriebegehäuseanordnung (10) nach einem der Ansprüche 1 bis 10, **dadurch gekennzeichnet, dass** eine Getriebeeingangswelle (56) und ein mit dem Gehäuseelement (12) verbundenes und die Getriebeeingangswelle (56) umgebendes Adaptergehäuse (32) zum Adaptieren eines Antriebsmotors (52) vorgesehen ist und das Luftleitelement (14) mittelbar über das Adaptergehäuse (32) mit dem Gehäuseelement (12) verbunden ist.

12. Getriebegehäuseanordnung (10) nach Anspruch 11, **dadurch gekennzeichnet, dass** ein Innenvolumen des Luftleitelements (14) kommunizierend mit einem Innenvolumen des Adaptergehäuses (32) verbunden ist.

13. Getriebegehäuseanordnung (10) nach einem der Ansprüche 1 bis 12, **dadurch gekennzeichnet, dass** das Luftleitelement (14) über in ihrer Position bedarfsweise veränderbare Halterungen (42) gegenüber dem Gehäuseelement (12) gehalten ist.

14. Getriebe (50) mit einer Getriebegehäuseanordnung (10) nach einem der vorangegangenen Ansprüche, **dadurch gekennzeichnet, dass** es sich um ein Stirnradgetriebe oder ein Kegelstirnradgetriebe handelt.
